# FASCICULE DE BREVET EUROPEEN

(11) **EP 4 661 285 B1**
(45) Date de publication et mention de la délivrance du brevet: **13.05.2026**
(21) Numéro de dépôt: 25170858.2
(22) Date de dépôt: 16.04.2025
(51) Int. Cl.: H02S 20/23, F24S 25/33, F24S 25/615

(54) **DISPOSITIF DE FIXATION DE PANNEAUX PHOTOVOLTAÏQUES SUR UNE TÔLE NERVURÉE ET BÂTIMENT ÉQUIPÉ DE TELLES TÔLES**
VORRICHTUNG ZUR BEFESTIGUNG VON PHOTOVOLTAIKPANEELEN AN EINEM GERIPPTEN BLECH UND GEBÄUDE MIT SOLCHEN BLECHEN
DEVICE FOR ATTACHING PHOTOVOLTAIC PANELS TO A RIBBED SHEET AND BUILDING PROVIDED WITH SUCH SHEETS

(30) Priorité: 17.05.2024 FR 2405080
(43) Date de publication de la demande: 10.12.2025
(73) Titulaire: Ateliers 3S, 63118 Cébazat (FR)
(72) Inventeur: CHERVET, Thomas, 63870 ORCINES (FR); FAISANDIER, Julien, 63110 BEAUMONT (FR)
(74) Mandataire: Dennemeyer & Associates S.A.

(56) Documents cités:
- WO-A1-2012/096344
- AU-A1- 2012 268 792
- DE-U1- 202009 004 269
- FR-A1- 2 962 194
- FR-A1- 3 004 242

## Description

L'invention a trait à un dispositif de fixation de panneaux photovoltaïques sur une tôle nervurée ainsi qu'à un bâtiment équipé de telles tôles.

Ici le terme bâtiment désigne toute construction, quel que soit le matériau de construction utilisé, quels que soient la forme et/ou la dimension et/ou l'usage du bâtiment. Ainsi il peut s'agir d'un bâtiment à usage industriel, commercial ou agricole, d'un bâtiment public, par exemple un bâtiment administratif, de soins, d'enseignement ou autre ou d'un bâtiment à usage particulier comme une maison individuelle ou encore un immeuble de logements.

Ici, l'expression « tôle nervurée » désigne tout élément de type plaque rectangulaire ou carrée, quel que soit le matériau constitutif, par exemple métallique ou autre, pourvue d'une alternance, régulière ou aléatoire, de reliefs dits positifs et négatifs sur toute la surface de la tôle. Les reliefs dits positifs ou nervures peuvent être de diverses sections transversales, par exemple en trapèze, rectangulaire, carré ou arrondi. Le terme nervure sera préférentiellement utilisé par la suite. Les reliefs dits négatifs sont des zones plates ou de type gorges à fond plat ou arrondi. Les reliefs négatifs peuvent être identiques ou non aux reliefs positifs et placés ou non en miroir. Dans tous les cas, ces tôles sont employées pour couvrir au moins une partie d'un bâtiment, toiture ou façade, dont l'orientation et les caractéristiques permettent une installation de panneaux photovoltaïques.

La fixation de panneaux photovoltaïques sur une tôle nervurée se fait une fois les tôles en place sur le bâtiment, les tôles étant constitutives de la toiture. La fixation doit permettre le montage et le démontage des panneaux photovoltaïques, cela sans affecter la fixation des tôles sur le bâtiment et sans nuire à l'étanchéité de la toiture ou de la façade. FR-A-3 004 242 décrit un système de fixation de panneaux photovoltaïques sur les nervures d'une tôle. Le système comprend un cavalier pourvu d'ailes épousant la forme des nervures. Une vis fixe le cavalier sur la nervure par passage dans un trou ménagé dans le sommet de la nervure. La face supérieure du cavalier comporte deux flancs parallèles prenant en étau un rail de fixation des panneaux. La fixation des rails est obtenue par des boulons insérés dans des trous ménagés dans les flancs. Un trou ménagé dans le fond du dispositif sert à fixer le dispositif sur la nervure. Une telle fixation doit se faire en dehors des zones de fixation de la tôle sur le toit, donc avec un calepinage préalable. On connaît par FR-A-2 962 194 une fixation de panneaux photovoltaïques par l'intermédiaire d'un rail placé sur le sommet de chaque nervure, sur toute la longueur de cette dernière. Au moins les extrémités de chaque rail comprennent un cavalier de forme complémentaire à celle de la nervure et fixé sur les extrémités des nervures. WO-A-2012/096 344 divulgue un support de panneaux photovoltaïques fixé directement sur le sommet de certaines nervures de la tôle. La face du support en appui sur la nervure est de forme complémentaire au sommet de cette dernière. DE-A-2020-090-04269 décrit un support de panneaux photovoltaïques de forme complémentaire à celle de la nervure et coiffant celle-ci. Le fond du support est en appui sur le sommet de la nervure et comprend deux pattes de guidage entre lesquels un rail de maintien d'un panneau photovoltaïque est placé tout en étant libre en translation pour un positionnement optimal.

Les diverses solutions connues assurent un maintien efficace sur la nervure, du fait des formes complémentaires des supports et des nervures de la tôle. Néanmoins, la mise en place des supports sur le sommet des nervures nécessite un calepinage afin que le support ne soit pas en appui sur les vis de fixation de la tôle sur le bâtiment, ces vis étant placées, plus ou moins régulièrement, sur le sommet des nervures. De plus, la fixation du support de panneaux photovoltaïques sur la nervure s'effectue généralement sur les flancs du support et de la nervure. Une telle fixation n'est pas optimale du point de vue ergonomique pour l'opérateur.

L'invention a pour objet de proposer une solution permettant de fixer simplement un panneau photovoltaïque sur les nervures d'une tôle nervurée sans qu'un calepinage soit nécessaire, tout en optimisant l'ergonomie de la pose de cette solution et en respectant les coûts de fabrication.

À cet effet, l'invention a pour objet un dispositif de fixation de panneaux photovoltaïques sur une tôle pourvue d'au moins une nervure, ladite tôle étant fixée sur un bâtiment, ledit dispositif comprenant au moins une tôle nervurée fixée par vissage sur le bâtiment par un cavalier coiffant le sommet d'une nervure, un corps principal ouvert aux extrémités et en partie supérieure, le fond du corps principal étant de forme complémentaire au sommet de la nervure de la tôle, caractérisé en ce que le fond du corps principal est pourvu d'au moins une ouverture définissant un passage entre le fond du corps principal et le sommet de la nervure lorsque le dispositif est en position sur la tôle nervurée et en ce que la largeur de l'ouverture ménagée dans le fond du corps principal est supérieure à la largeur d'un cavalier de fixation du sommet de la nervure de la tôle.

Grâce à l'invention, on peut positionner le dispositif n'importe où sur le sommet d'une nervure, la présence de l'ouverture permettant le passage des vis de fixation de la tôle sur le bâtiment. Il n'est plus nécessaire de prévoir un calepinage, ce qui induit un gain de temps pour la mise en place des dispositifs de fixation et donc des panneaux photovoltaïques.

Selon des aspects avantageux, mais non obligatoires de l'invention, un tel dispositif peut comprendre une ou plusieurs des caractéristiques suivantes :

L'ouverture dans le fond est formée par au moins un orifice traversant.

L'ouverture dans le fond est formée par au moins une découpe ménagée sur au moins une extrémité du fond.

L'ouverture est équipée d'un cache amovible de masquage de l'ouverture.

La largeur du fond est supérieure à la largeur du sommet de la nervure de la tôle.

Au moins une partie d'extrémité de la paroi externe du corps principal est en appui sur une paroi latérale de la nervure.

Au moins une portion de la partie d'extrémité est en appui sur une portion d'une zone internervures.

Le fond est pourvu d'au moins une vis de fixation sur le sommet, la vis étant accessible par la partie ouverte du corps principal.

L'invention concerne également un bâtiment équipé d'au moins une tôle nervurée pourvue d'au moins un dispositif de fixation de panneaux photovoltaïques conforme à l'une quelconque des caractéristiques précédentes.

L'invention sera mieux comprise et d'autres avantages de celle-ci apparaîtront plus clairement à la lecture de la description qui va suivre, donnée uniquement à titre d'exemple non limitatif et faite en référence aux dessins annexés dans lesquels:
[Fig.1] est une vue en perspective d'un dispositif de fixation de panneaux photovoltaïques conforme à un mode de réalisation de l'invention en place sur une nervure d'une tôle nervurée, la tôle étant partiellement illustrée,
[Fig.2] est une vue en coupe, à une autre échelle, selon le plan de coupe II, une partie du dispositif étant dans une autre configuration de l'invention,
[Fig.3] est une vue en coupe, à une autre échelle, similaire à la figure 2, selon un autre mode de réalisation de l'invention,
[Fig.4] est une vue en coupe, similaire à la figure 3 selon une autre mode de réalisation de l'invention et
[Fig.5] est une vue en coupe similaire à la figure 2, selon un autre mode de réalisation de l'invention.

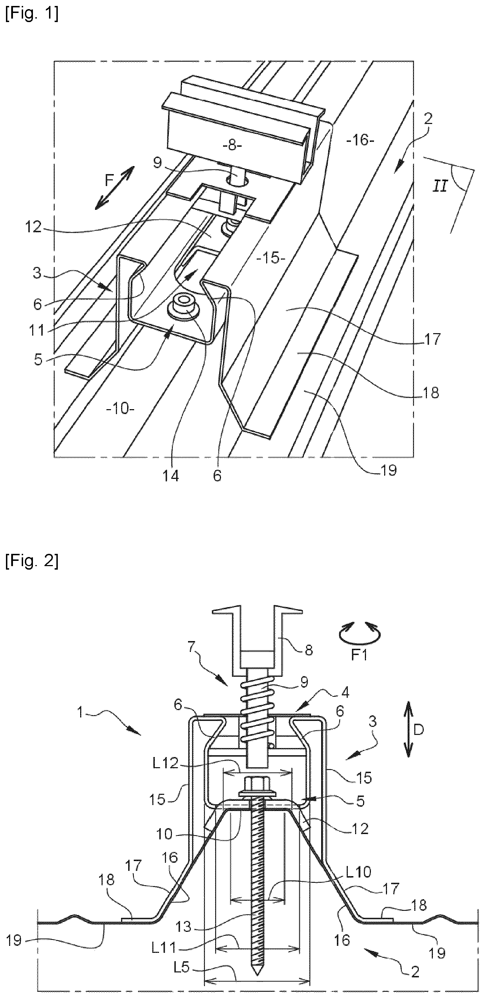

La figure 1 illustre un dispositif 1 de fixation de panneaux photovoltaïques en place sur une nervure 2 d'une tôle nervurée, ici représentée partiellement. Cette nervure 2 est, dans l'exemple, à section transversale trapézoïdale. En variante, la forme et/ou les dimensions de la nervure sont différentes de celles illustrées. De même, une tôle peut comporter un jeu de nervures identiques ou non. Dans tous les cas le dispositif 1 de fixation est adapté de par sa forme et ses dimensions à la configuration géométrique de la ou des nervure(s) de la tôle sur laquelle il sera fixé.

Le dispositif 1 comprend un corps principal 3 ouvert vers le haut et aux extrémités. Le corps principal 3 est ici globalement à section extérieure rectangulaire. En variante il a une autre configuration en section transversale, par exemple carrée. Dans tous les cas, la partie ouverte 4 du corps principal 3 est orientée vers le haut en regardant les figures 1 et 2, c'est-à-dire orientée en direction du panneau photovoltaïque lorsque celui-ci est en place sur le dispositif 1. Selon les modes de réalisation illustrés aux figures 1 et 2, la partie ouverte 4 du corps principal 3 est d'une largeur inférieure à la partie 5 du corps principal 3 qui constitue le fond de ce dernier. Les parois internes 6 du corps principal 3, ne sont pas rectilignes au niveau de leurs extrémités libres définissant l'ouverture 4 du corps principal 3 mais inclinées l'une vers l'autre, donc en direction de l'intérieur du corps 3. Une telle configuration définit une ouverture de plus faible largeur que le reste du volume du corps 3. En d'autres termes, une telle configuration du corps 3 définit un rail. Ce rail permet d'insérer dans le volume interne du corps 3, avec un degré de liberté en translation, illustré par la double flèche F, une pièce 7 permettant de solidariser le dispositif à un panneau photovoltaïque, non illustré.

Outre un degré de liberté en translation le long du corps principal 3, il est également possible de faire pivoter, selon la double flèche F1 à la figure 2, une partie 8 de la pièce 7, en fonction de la position du panneau photovoltaïque. Les figures 1 et 2 représentent ainsi deux positions différentes de la partie 8 qui définit un logement de réception d'un organe de liaison fixé sur un panneau photovoltaïque. La partie 8 est bloquée en position et immobilisée en translation à l'aide d'une vis 9. En variante, le blocage est obtenu par d'autres moyens connus en soi.

Le fond 5 du corps principal 3 est de formes et de dimensions complémentaires aux formes et aux dimensions du sommet 10 de la nervure 2 sur lequel il est fixé. Ici, la nervure 2 étant trapézoïdale, le fond 5 est globalement rectangulaire et plan, de formes complémentaires à celles du sommet 10 qui en l'espèce est plat. La longueur du fond 5 définit la longueur du dispositif et elle est variable et adaptée à la longueur de la tôle nervurée et/ou du panneau photovoltaïque. La largeur L5 du fond 5 est légèrement supérieure à la largeur L10 du sommet 10. De la sorte, le fond 5, donc le corps principal 3, déborde latéralement des deux côtés du sommet 10. Au moins un orifice traversant 11 est ménagé dans le fond 5 et définit une ouverture d'accès au volume interne du corps 3. L'orifice 11 peut être de forme arrondie, ovale, rectangulaire ou autre. En variante plusieurs orifices 11, de dimensions et/ou formes identiques ou non, alignés ou non, sont ménagés sur le fond 5. Dans un autre mode de réalisation, un cache déplaçable ou rabattable permet de dégager l'orifice 11 ou de le masquer. Dans un autre mode de réalisation, ce n'est pas un orifice qui est ménagé sur le fond, mais au moins une découpe ménagée à partir d'une extrémité du fond 5. Dans tous les cas, selon l'invention, on réalise un fond 5 partiellement ouvert sur une partie de sa surface. La présence de cet orifice ou de cette découpe permet de positionner le dispositif 1 n'importe où sur le sommet 10 de la nervure 2, que ce soit au niveau d'un point de fixation ou non de la nervure 2 sur un bâtiment en définissant un accès libre à l'intérieur du corps principal 3.

En effet, comme cela apparaît plus particulièrement à la figure 2, la fixation d'une tôle sur un bâtiment est obtenue par un cavalier 12 coiffant une nervure 2 à partir de son sommet 10 et maintenant en place la nervure 2, donc la tôle, par une vis 13. On note que, non seulement la largeur L5 du fond 5 est supérieure à celle L12 du cavalier 12, mais qu'il en est de même pour la largeur L11 de l'orifice 11. Ainsi, les dimensions de l'orifice 11 sont suffisantes pour autoriser le libre passage du cavalier 12 et de la tête de la vis 13 dans l'orifice 11 et donc dans l'espace inférieur du corps 3. Ainsi, que le sommet 10 de la nervure 2 présente ou non des zones en relief formées par les vis 13 de blocage du cavalier 12, donc de fixation de la tôle sur le bâtiment, il n'est plus nécessaire de prévoir un calepinage pour positionner le dispositif 1 de fixation des panneaux photovoltaïques uniquement dans des zones dépourvues de vis 13 et de cavalier 12.

Le dispositif 1 est solidarisé à la nervure 2 par au moins une vis 14 insérée dans la partie pleine du fond 5 et solidarisant ce denier au sommet 10. Comme cela apparaît à la figure 1, cette fixation est aisée puisqu'elle se fait selon une direction illustrée par la flèche D, globalement perpendiculaire au sommet 10 de la nervure, à partir de la partie ouverte 4 du corps principal 3. En d'autres termes, un opérateur placé sur le toit peut fixer par un mouvement vertical orienté en direction de la tôle les dispositifs 1 ce qui du point de vue ergonomique est optimal, en évitant tout mouvement de torsion de l'opérateur. Une telle solution de fixation est préférable à celle connue qui se fait sur les flancs du dispositif 1 et de la nervure 2 ce qui oblige l'opérateur a adopté une position peu ergonomique.

On note également que les parois externes 15 du corps principal 3 se prolongent en direction de la base de la nervure 2, au-delà du fond 5. Les parois externes 15 du corps principal 3 sont de formes complémentaires à celles des parois latérales 16 de la nervure 2. Ainsi les extrémités 17 des parois 15 sont orientées angulairement et viennent en appui sur les parois 16 de la nervure 2. La partie terminale 18 des extrémités 17 est repliée vers l'extérieur de sorte à être en appui sur au moins une portion 19 de la zone internervures. En d'autres termes, au moins une paroi externe 15 du corps 3 est en appui sur au moins une des parois latérales 16 de la nervure 2. On limite ainsi les mouvements latéraux du dispositif 1 tout en autorisant un déplacement longitudinal de ce dernier le long de la nervure 2. Avantageusement les deux parois externes 15 sont de formes complémentaires aux parois latérales 16 de la nervure 2 et viennent ainsi en appui de chaque côté de cette dernière.

Les figues 3 et 4 représentent deux autres modes de réalisation de l'invention. Les éléments identiques aux modes de réalisation des figures 1 à 4 conservent les mêmes références. En particulier, pour faciliter la lecture, la nervure 2, la vis 13 de fixation du cavalier 12 sur le sommet 10 de la nervure 2 sont identiques. Il en est de même pour la partie 8 de fixation d'un panneau photovoltaïque et de sa vis 9 de blocage en position.

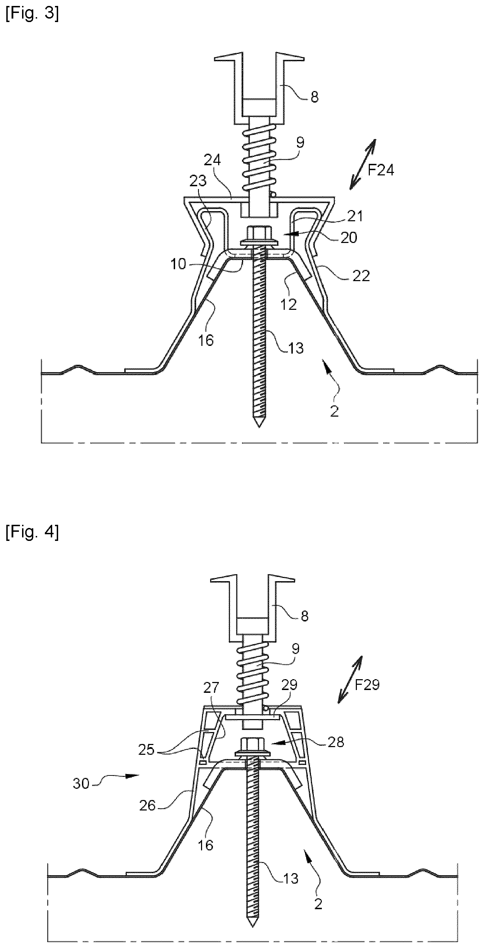

À la figure 3, le corps principal 20 a des parois internes 21 verticales et parallèles. Elles sont reliées à des parois externes 22 de configuration similaire aux parois 15 et 17. Les parois 22 sont ainsi en appui sur les parois latérales 16 de la nervure 2. Les extrémités supérieures 23 des parois 22 sont inclinées vers l'extérieur, les deux extrémités 23 formant ainsi un V. la partie ouverte du corps 20 est coiffée par une pièce 24 pourvue d'un orifice de passage de la vis 9. Cette pièce 24, de forme complémentaire aux extrémités 23 est montée coulissante le long du dispositif selon la double flèche F24. En d'autres termes, la figure 3 illustre un mode de réalisation où la pièce de solidarisation du panneau photovoltaïque coiffe le corps 20 en étant coulissante sur ce dernier au lieu d'entre, comme aux figures 1 et 2, insérée et coulissante dans le corps 2.

La figure 4 représente une variante du premier mode de réalisation. Des renforts 25 relient les parois externes 26 et internes 27 du corps principal 28. La partie supérieure du corps principal 28 reçoit, du côté du volume ouvert du corps 28, une rondelle ou une bague 29. cette bague 29 maintient en place l'extrémité de la vis 9 tout en autorisant sa translation dans le corps 28 selon la double flèche F29. La figure 4 illustre une version dans laquelle, par rapport à la version illustrée aux figures 1 et 2, la résistance mécanique du dispositif 30 est améliorée, les renforts 25 assurant la rigidification de l'ensemble et limitant tout phénomène de vrillage ou d'écartement accidentel des parois 26, 27 du corps 28.

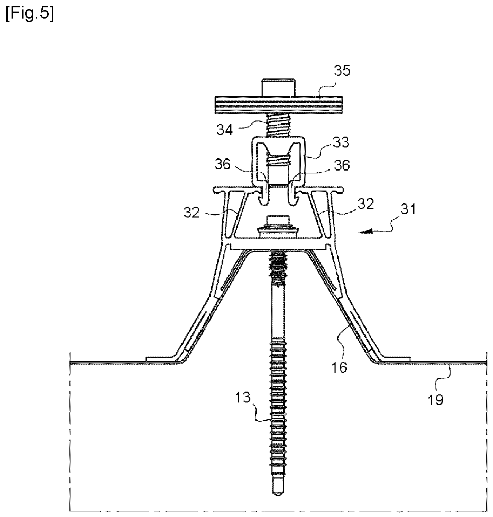

La figure 5 illustre un autre mode, préféré, de réalisation de l'invention. Ici, le corps 31 du rail a une configuration renforcée par rapport aux autres modes de réalisation, avec des renforts internes 32. Un étrier 33 est positionné sur l'ouverture supérieure du corps 31. Une vis 34 traverse verticalement l'étrier 33 et assure un maintien, réglable en hauteur, d'un organe de fixation 35 d'un panneau photovoltaïque, non illustré. L'étrier 33 est globalement en forme de U inversé dont la partie ouverte est insérée partiellement dans l'ouverture du corps 31 du rail. Ainsi l'étrier 33 comprend deux pattes 36 en forme de crochet qui sont en prise avec la face inférieure des parois définissant l'ouverture du rail. Une telle configuration permet de maintenir l'étrier 33 sur le corps 31 tout en autorisant sa translation le long du rail. Une plaque plane, non illustrée, est placée entre l'ouverture du rail et l'étrier 33, ce dernier s'insérant dans une ouverture centrale ménagée dans la plaque et de forme et de dimensions complémentaires à celles de l'étrier 33. La plaque est également pourvue d'au moins quatre pattes en forme de crochet, ces derniers étant en prise avec la face inférieure des parois définissant l'ouverture du rail. On a ainsi un blocage en position de l'étrier, ce dernier étant immobilisé en translation et ne pouvant se déplacer le long du rail que sous l'effet d'une poussée forte. En d'autres termes, la patte et l'étrier 33, de par la présence de pattes en forme de crochet, assurent un maintien par clipsage du panneau sur le rail tout en autorisant un déplacement lors d'une action volontaire de poussée de l'étrier 33, donc du panneau photovoltaïque. Par ailleurs la plaque plane, métallique assure un contact entre les divers éléments métalliques et donc une mise à la terre du panneau photovoltaïque.

L'invention, outre l'absence de calepinage, donc une fixation plus rapide des panneaux photovoltaïques, permet une fixation par le haut du dispositif 1 sur les nervures 2 d'une tôle, ce qui améliore l'ergonomie pour l'opérateur.

## Revendications

1. Dispositif (1, 30) de fixation de panneaux photovoltaïques sur une tôle pourvue d'au moins une nervure (2), ladite tôle étant fixée sur un bâtiment, ledit dispositif (1, 30) comprenant au moins a tôle nervurée fixée par vissage sur le bâtiment par un cavalier coiffant le sommet de la nervure, un corps principal (3, 20, 28) ouvert aux extrémités et en partie supérieure, le fond (5) du corps principal (3, 20, 28) étant de forme complémentaire au sommet (10) de la nervure (2) de la tôle, **caractérisé en ce que** le fond (5) du corps principal (3) est pourvu d'au moins une ouverture (11) définissant un passage entre le fond (5) du corps principal (3, 20, 28) et le sommet (10) de la nervure (2) lorsque le dispositif (1, 30) est en position sur la tôle nervurée et **en ce que** la largeur (L11) de l'ouverture (11) ménagée dans le fond (5) du corps principal (3, 20, 28) est supérieure à la largeur (L12) du cavalier (12) de fixation du sommet (10) de la nervure (2) de la tôle.

2. Dispositif selon la revendication 1, **caractérisé en ce que** l'ouverture dans le fond (5) est formée par au moins un orifice traversant (11).

3. Dispositif selon la revendication 1, **caractérisé en ce que** l'ouverture dans le fond (5) est formée par au moins une découpe ménagée sur au moins une extrémité du fond (5).

4. Dispositif selon l'une des revendications précédentes, **caractérisé en ce que** l'ouverture (11) est équipée d'un cache amovible de masquage de l'ouverture.

5. Dispositif selon la revendication 1, **caractérisé en ce que** la largeur (L5) du fond (5) est supérieure à la largeur (L10) du sommet (10) de la nervure (2) de la tôle.

6. Dispositif selon la revendication 1, **caractérisé en ce qu'**au moins une partie d'extrémité (17) de la paroi externe (15) du corps principal (3) est en appui sur une paroi latérale (16) de la nervure (2).

7. Dispositif selon la revendication 6, **caractérisé en ce qu'**au moins une portion (18) de la partie d'extrémité (17) est en appui sur une portion (19) d'une zone internervures.

8. Dispositif selon l'une des revendications précédentes, **caractérisé en ce que** le fond (5) est pourvu d'au moins une vis de fixation (14) sur le sommet (10), la vis (14) étant accessible par la partie ouverte (4) du corps principal (3).

9. Bâtiment équipé d'au moins une tôle nervurée pourvue d'au moins un dispositif (1) de fixation de panneaux photovoltaïques conforme à l'une quelconque des revendications précédentes.

## Patentansprüche

1. Vorrichtung (1, 30) zur Befestigung von Photovoltaikmodulen an einem Blech, das mit mindestens einer Rippe (2) versehen ist, wobei das Blech an einem Gebäude befestigt ist, wobei die Vorrichtung (1, 30) mindestens das gerippte Blech, das durch einen auf der Oberkante der Rippe sitzenden Bügel mittels Verschraubung an dem Gebäude befestigt ist, einen an den Enden und im oberen Teil offenen Hauptkörper (3, 20, 28) umfasst, wobei der Boden (5) des Hauptkörpers (3, 20, 28) eine zur Oberkante (10) der Rippe (2) des Blechs komplementäre Form aufweist, **dadurch gekennzeichnet, dass** der Boden (5) des Hauptkörpers (3) mit mindestens einer Öffnung (11) versehen ist, die einen Durchgang zwischen dem Boden (5) des Hauptkörpers (3, 20, 28) und der Oberkante (10) der Rippe (2) definiert, wenn die Vorrichtung (1, 30) sich in Position auf dem gerippten Blech befindet, und dass die Breite (L11) der im Boden (5) des Hauptkörpers (3, 20, 28) ausgesparten Öffnung (11) größer ist als die Breite (L12) des Bügels (12) zur Befestigung der Oberkante (10) der Rippe (2) des Blechs.

2. Vorrichtung nach Anspruch 1, **dadurch gekennzeichnet, dass** die Öffnung im Boden (5) durch mindestens eine Durchgangsöffnung (11) gebildet ist.

3. Vorrichtung nach Anspruch 1, **dadurch gekennzeichnet, dass** die Öffnung im Boden (5) durch mindestens einen Ausschnitt gebildet ist, der an mindestens einem Ende des Bodens (5) ausgespart ist.

4. Vorrichtung nach einem der vorhergehenden Ansprüche, **dadurch gekennzeichnet, dass** die Öffnung (11) mit einer abnehmbaren Blende zum Verdecken der Öffnung ausgestattet ist.

5. Vorrichtung nach Anspruch 1, **dadurch gekennzeichnet, dass** die Breite (L5) des Bodens (5) größer ist als die Breite (L10) der Oberkante (10) der Rippe (2) des Blechs.

6. Vorrichtung nach Anspruch 1, **dadurch gekennzeichnet, dass** mindestens ein Endteil (17) der Außenwand (15) des Hauptkörpers (3) an einer Seitenwand (16) der Rippe (2) anliegt.

7. Vorrichtung nach Anspruch 6, **dadurch gekennzeichnet, dass** mindestens ein Abschnitt (18) des Endteils (17) an einem Abschnitt (19) einer Zwischenrippenzone anliegt.

8. Vorrichtung nach einem der vorhergehenden Ansprüche, **dadurch gekennzeichnet, dass** der Boden (5) mit mindestens einer Befestigungsschraube (14) an der Oberkante (10) versehen ist, wobei die Schraube (14) durch den offenen Teil (4) des Hauptkörpers (3) zugänglich ist.

9. Gebäude, das mit mindestens einem gerippten Blech ausgestattet ist, das mit mindestens einer Vorrichtung (1) zur Befestigung von Photovoltaikmodulen gemäß einem der vorhergehenden Ansprüche versehen ist.

## Claims

1. A device (1, 30) for fastening photovoltaic panels onto a metal sheet having at least one rib (2), said metal sheet being fastened onto a building, said device (1, 30) comprising at least the ribbed metal sheet fastened by screwing onto the building by a staple capping the apex of the rib, a main body (3, 20, 28) open at the ends and at the top part, the base (5) of the main body (3, 20, 28) having a shape complementary to the apex (10) of the rib (2) of the metal sheet,
**characterized in that** the base (5) of the main body (3) has at least one opening (11) defining a passage between the base (5) of the main body (3, 20, 28) and the apex (10) of the rib (2) when the device (1, 30) is in position on the ribbed metal sheet, and **in that** the width (L11) of the opening (11) arranged in the base (5) of the main body (3, 20, 28) is greater than the width (L12) of the fastening staple (12) of the apex (10) of the rib (2) of the metal sheet.

2. The device according to claim 1, **characterized in that** the opening in the base (5) is formed by at least one through orifice (11).

3. The device according to claim 1, **characterized in that** the opening in the base (5) is formed by at least one cut-out arranged on at least one end of the base (5).

4. The device according to one of the previous claims, **characterized in that** the opening (11) is equipped with a removable cover masking the opening.

5. The device according to claim 1, **characterized in that** the width (L5) of the base (5) is greater than the width (L10) of the apex (10) of the rib (2) of the metal sheet.

6. The device according to claim 1, **characterized in that** at least one end part (17) of the external wall (15) of the main body (3) is resting on a lateral wall (16) of the rib (2).

7. The device according to claim 6, **characterized in that** the at least one portion (18) of the end part (17) is resting on one portion (19) of an inter-rib zone.

8. The device according to one of the previous claims, **characterized in that** the base (5) has at least one fastening screw (14) on the apex (10), the screw (14) being accessible through the open part (4) of the main body (3).

9. A building equipped with at least one ribbed metal sheet having at least one fastening device (1) for photovoltaic panels conforming to any one of the previous claims.
